# EUROPÄISCHE PATENTSCHRIFT

(11) **EP 1 788 219 B1**
(45) Veröffentlichungstag und Bekanntmachung des Hinweises auf die Patenterteilung: **05.12.2012**
(21) Anmeldenummer: 06021101.8
(22) Anmeldetag: 07.10.2006
(51) Int. Cl.: F02B 37/013

(54) **Schaltbare zweistufige Abgasturboladeranordnung für eine Brennkraftmaschine**
Two-stage exhaust turbocharger arrangement for an internal combustion engine
Arrangement des turbocompresseurs à gaz d'échappement à deux étages pour un moteur à combustion interne

(30) Priorität: 18.11.2005 DE 102005055012
(43) Veröffentlichungstag der Anmeldung: 23.05.2007
(73) Patentinhaber: Bayerische Motoren Werke Aktiengesellschaft, 80809 München (DE)
(72) Erfinder: Wimmer, Rudolf, 4431 Haidershofen (AT); Jursitzky, Christian, 4441 Behamberg (AT)

(56) Entgegenhaltungen:
- EP-A2- 1 136 676
- WO-A-01/81744
- JP-A- 60 101 223
- US-A- 2 397 816
- US-B1- 6 345 503

## Beschreibung

Die vorliegende Erfindung betrifft eine schaltbare, zweistufige Abgasturboladeranordnung für eine Brennkraftmaschine, mit einem Niederdrucklader und einem Hochdrucklader, deren Turbinen mit einem Abgassammler der Brennkraftmaschine verbunden sind und deren Verdichter mittels einer Ladeluftleitung miteinander und mit einem Ladeluftkühler gasführend verbindbar sind.

Mit einer zweistufigen Abgasturboladeranordnung kann ein guter Verdichtungswirkungsgrad und hoher Verbrennungsmitteldruck erreicht werden. Es sind auch bereits beispielsweise anhand von DE 102 30 934 A1 schaltbare, zweistufige Abgasturboladeranordnungen für Brennkraftmaschinen bekannt geworden. Eine solche Abgasturboladeranordnung weist einen Hochdrucklader auf, der bereits bei niedrigen Drehzahlen der Brennkraftmaschine für eine entsprechende Aufladung sorgt und hierzu über eine Ladeluftleitung zur Verbrennung vorgesehene Luft zugeführt bekommt und zwar aus einem Auslass des Niederdruckverdichters des Niederdruckladers, der über einen Verdichtereinlass mit Reinluft aus einem Reinluftrohr der Brennkraftmaschine versorgt wird.

Steigt nun die Drehzahl der Brennkraftmaschine an, so kann über ein Steuergerät die Ladeluftzufuhr zum Hochdruckverdichter beschränkt werden und die Aufladung der Brennkraftmaschine im wesentlichen vom Niederdruckverdichter übernommen werden, wobei auch in diesem Betriebszustand der Brennkraftmaschine ein Stellelement am Niederdruckverdichter so angesteuert werden kann, dass ein Teilvolumenstrom der Ladeluft nach wie vor zum Hochdruckverdichter gelangt, dieser aber nicht in Überdrehzahl kommt.

Die Brennkraftmaschine muss mit der Ladergruppe und sämtlichen gasführenden Leitungen im Motorraum eines Kraftfahrzeugs Platz finden, wobei der im Motorraum zur Verfügung stehende Einbauraum noch durch einen etwaig vorhandenen Partikelfilter weiter beschränkt wird, sodass sich Schwierigkeiten bei der Montage ergeben und damit die Herstellkosten entsprechend ansteigen.

Ausgehend hiervon liegt der vorliegenden Erfindung nunmehr die Aufgabe zugrunde, die bekannte Abgasturboladeranordnung derart weiterzubilden, dass die Montage im Motorraum vereinfacht wird und ein Partikelfilter brennkraftmaschinennah angebracht werden kann, ohne mit den gasführenden Leitungen zu kollidieren.

Die Erfindung weist nun zur Lösung dieser Aufgabe die im Anspruch 1 angegebenen Merkmale auf. Vorteilhafte Ausgestaltungen hiervon sind weiteren Ansprüchen beschrieben.

Die zur Lösung dieser Aufgabe geschaffene Erfindung sieht nun eine schaltbare, zweistufige Abgasturboladeranordnung für eine Brennkraftmaschine vor, mit einem Niederdrucklader und einem Hochdrucklader, deren Turbinen mit einem Abgassammler der Brennkraftmaschine verbunden sind und deren Verdichter mittels einer Ladeluftleitung miteinander und mit einem Ladeluftkühler gasführend verbindbar sind, wobei die Ladeluftleitung einstückig ausgebildet ist und einen ersten Leitungsabschnitt aufweist, mittels dem ein Auslass des Niederdruckverdichters mit einem Einlass des Hochdruckverdichters verbindbar ist und einen zweiten Leitungsabschnitt aufweist, mittels dem ein Auslass des Hochdruckverdichters mit dem Ladeluftkühler verbindbar ist. Damit schafft die Erfindung eine Abgasturboladeranordnung mit einer Ladeluftleitung, die als vormontiertes Bauteil an der Ladergruppe angebracht werden kann und sich ohne Überschneidungen, Durchdringungen oder dergleichen mit anderen gasführenden Leitungen der Brennkraftmaschine so nahe an die Brennkraftmaschine anschmiegt, dass die Ladergruppe mit der Ladeluftleitung ausreichenden Abstand zu beispielsweise Fahrzeuglängsträgern im Motorraum des Kraftfahrzeugs besitzt und Bauraum schafft für die brennkraftmaschinennahe Anordnung eines Partikelfilters und darüber hinaus nicht mit gasführenden Leitungen, wie beispielsweise dem Reinluftrohr von dem Luftfilterelement der Brennkraftmaschine zum Einlass des Niederdruckverdichters kollidiert.

Nach einer Weiterbildung der Erfindung ist es vorgesehen, dass der erste Leitungsabschnitt einen Abzweig aufweist zur gasführenden Verbindung des Niederdruckverdichters mit dem Ladeluftkühler, sodass Ladeluft vom Auslass des Niederdruckverdichters zum Ladeluftkühler transportiert werden kann.

Um nun eine Schaltfunktion hinsichtlich des Gaswegs des Ladeluftstroms ausführen zu können, ist es nach der Erfindung vorgesehen, dass im Bereich des Abzweigs ein Stellelement vorgesehen ist, mittels dem der von der Ladeluft durchströmte Querschnitt vom Niederdruckverdichter zum Ladeluftkühler und Hochdruckverdichter veränderbar ist. Mit diesem Stellelement kann nun einerseits die Richtung des den Niederdruckverdichterauslass verlassenden Ladeluftstroms verändert werden, ob also der Ladeluftstrom in Richtung zum Hochdruckverdichtereinlass geleitet wird oder zum Ladeluftkühler hin oder bei Zwischenstellungen des Stellelements in unterschiedlichen Volumenstromanteilen zu den genannten Bauteilen hin geleitet wird.

Es ist dabei nach der Erfindung vorgesehen, dass der Abzweig ein mit dem ersten und zweiten Leitungsabschnitt lösbar verbindbares Kniestück ist, an dem das Stellelement verdrehbar oder verschwenkbar angelenkt ist. Über eine entsprechende Ansteuerung des Stellelements beispielsweise durch eine Unterdruckverstelleinheit, die von einem Motorsteuergerät angesteuert wird, kann nun der vorstehend erwähnte Volumenstromanteil der Ladeluft zu dem Eingang des Hochdruckverdichters und dem Ladeluftkühler verändert werden.

Bei dem Stellelement kann es sich um eine von der in Richtung zum Ladeluftkühler strömenden Ladeluft gegen einen Dichtsitz beaufschlagte Klappe handeln, sodass die Klappe bei dieser Ausführungsform gegen den vom Niederdruckverdichterauslass kommenden Ladeluftstrom geöffnet werden muss.

Nach einer Alternative hierzu kann es sich bei dem Stellelement um eine von der in Richtung zum Ladeluftkühler strömenden Ladeluft von einem Dichtsitz weg beaufschlagte Klappe handeln, sodass die Klappe gegen den vom Niederdruckverdichter stammenden Ladeluftstrom zugedrückt werden muss.

Nach einer weiteren Ausführungsform kann es sich bei dem Stellelement um einen Drehschieber handeln, der in dem Abzweig verdrehbar angeordnet ist und eine zur Ladeluftumleitung gekrümmt ausgebildete Anströmfläche besitzt, sodass die Anströmfläche für eine druckverlustreduzierende Umlenkung des Ladeluftstroms in dem Abzweig zum Hochdruckverdichtereinlass und/oder Ladeluftkühler sorgt.

Nach einer weiteren Alternative hierzu kann es sich bei dem Stellelement um eine im Strömungsquerschnitt des Abzweigs weitgehend mittig drehbar angeordnete Klappe handeln, die wiederum für eine betriebspunktabhängige Aufteilung des Ladeluftstroms in Richtung zum Einlass des Hochdruckverdichters oder zum Ladeluftkühler sorgt.

Um nun den beengten Platzverhältnissen im Motorraum eines Kraftfahrzeugs Rechnung zu tragen, ist es nach der Erfindung vorgesehen, dass der erste und zweite Leitungsabschnitt der Ladeluftleitung über weitgehend ihre gesamte Längserstreckung weitgehend parallel verlaufend ausgebildet sind. Die Anordnung des ersten und zweiten Leitungsabschnitts kann dabei so gewählt werden, dass der zweite Leitungsabschnitt in einer Draufsichtansicht von oben oberhalb des ersten Leitungsabschnitts verläuft und sich die so gebildete Ladeluftleitung eng an die Brennkraftmaschine anschmiegt und in Fahrzeuglängsrichtung betrachtet seitlich nicht über einen Partikelfilter hinausragt.

Nach einer Weiterbildung der Erfindung ist es darüber hinaus vorgesehen, dass der erste und/oder zweite Leitungsabschnitt mindestens einen Kanal besitzt, durch den Kühlmittelfluid hindurch leitbar ist. Bei diesem Kanal kann es sich beispielsweise um einen den ersten und/oder zweiten Leitungsabschnitt ringförmig umgebenden Ringkanal handeln, durch den Kühlmittelfluid hindurch geleitet werden kann und somit bereits vor dem Ladeluftkühler die vom Hochdruckverdichter stammende Ladeluft gekühlt werden kann und/oder die vom Auslass des Niederdruckverdichters zum Einlass des Hochdruckverdichters strömende Ladeluft zwischengekühlt werden kann, sodass eine beträchtliche Leistungssteigerung der Brennkraftmaschine erzielt werden kann.

Nach einer Weiterbildung der Erfindung ist es darüber hinaus vorgesehen, dass der Kanal mit mindestens einer Leitung verbindbar ist, über die Kühlmittelfluid in den Bereich von Lagern von Wellen des Niederdruckladers und/oder Hochdruckladers zur Lagerkühlung geführt werden kann. Mit dieser Anordnung kann also beispielsweise Kühlmittelfluid aus dem Kühlkreislauf der Brennkraftmaschine zu Lagerstellen der Welle des Hochdruckladers geleitet werden, von dort über einen an der Ladeluftleitung vorgesehenen Kanal zur Zwischenkühlung der Ladeluft vom Niederdruckverdichter zum Hochdruckverdichter eingesetzt werden und von dort wiederum zu Lagerstellen der Welle des Niederdruckverdichters zur Lagerkühlung geführt werden, bevor das Kühlmittelfluid wieder in den Kühlkreislauf der Brennkraftmaschine - oder einen hierzu vorgesehenen eigenen Kühlkreislauf - rückgeführt und dort gekühlt wird.

Durch die ganz spezielle erfindungsgemäße Ausgestaltung der Ladeluftleitung wird es darüber hinaus auch erreicht, dass die Abgasturboladeranordnung an der Brennkraftmaschine so angebracht werden kann, dass die Ladeluftleitung und ein Reinluftrohr der Brennkraftmaschine zueinander berührungsfrei verlaufen und auch ein Partikelfilter eine brennkraftmaschinennahe Lage besitzt und im Abstand zur Abgasturboladeranordnung angebracht werden kann.

Schließlich ist es nach einer Weiterbildung der Erfindung auch vorgesehen, dass zwischen der Ladeluftleitung und dem Ladeluftkühler ein elastischer Ladeluftschlauch angeordnet ist, derart, dass eine Körperschallübertragung von der Ladeluftleitung zum Ladeluftkühler weitgehend vermieden ist. Die erfindungsgemäße Ausbildung der Abgasturboladeranordnung lässt beispielsweise die Verwendung eines Ladeluftschlauches zu, der eine Länge von mehr als 100 mm besitzt und aufgrund seiner Länge weich ausgebildet sein kann und beispielsweise reaktionsmomentenbedingte Bewegungen der Brennkraftmaschine zulässt und aufgrund seiner wenig steifen weichen Ausbildung die Körperschallübertragung von der Ladeluftleitung zum Ladeluftkühler behindert und für eine akustische Entkopplung sorgt.

Schließlich ist es nach der Erfindung auch noch vorgesehen, dass der Niederdrucklader und der Hochdrucklader derart angeordnet sind, dass die Turbinen voneinander weg ausgerichtet sind. Es bedeutet dies mit anderen Worten, dass bei einer Seitenansicht auf die an der Brennkraftmaschine angeordnete Abgasturboladeranordnung die Turbinen der beiden Abgasturbolader voneinander weg gerichtet verlaufen.

Die Erfindung wird nun im Folgenden anhand der Zeichnung näher erläutert. Diese zeigt in:
Fig. 1 eine Seitenansicht auf eine Brennkraftmaschine mit einer Ausführungsform einer Abgasturboladeranordnung nach der vorliegenden Erfindung;
Fig. 2 eine Ansicht von der Seite auf eine Abgasturboladeranordnung;
Fig. 3 einen teilweise geschnittenen Ausschnitt aus dem Bereich der Abgasturboladeranordnung im Bereich des Niederdruckverdichters mit einem Stellelement nach einer ersten Ausführungsform, die nicht Teil der Erfindung ist;
Fig.4 eine Ansicht ähnlich Fig. 3 mit einem Stellelement nach einer alternativen Ausführungsform, die nicht Teil der Erfindung ist;
Fig.5 eine Darstellung ähnlich Fig. 3 mit einem Stellelement nach einer Ausführungsform, wobei das Stellelement zur weitgehenden Umlenkung des Ladeluftstroms vom Niederdruckverdichter zum Ladeluftkühler angeordnet ist; und
Fig. 6 eine Darstellung ähnlich Fig. 5, wobei das Stellelement so angeordnet ist, dass der vom Niederdruckverdichter stammende Ladeluftstrom in Richtung zum Einlass des Hochdruckverdichters umgelenkt ist.

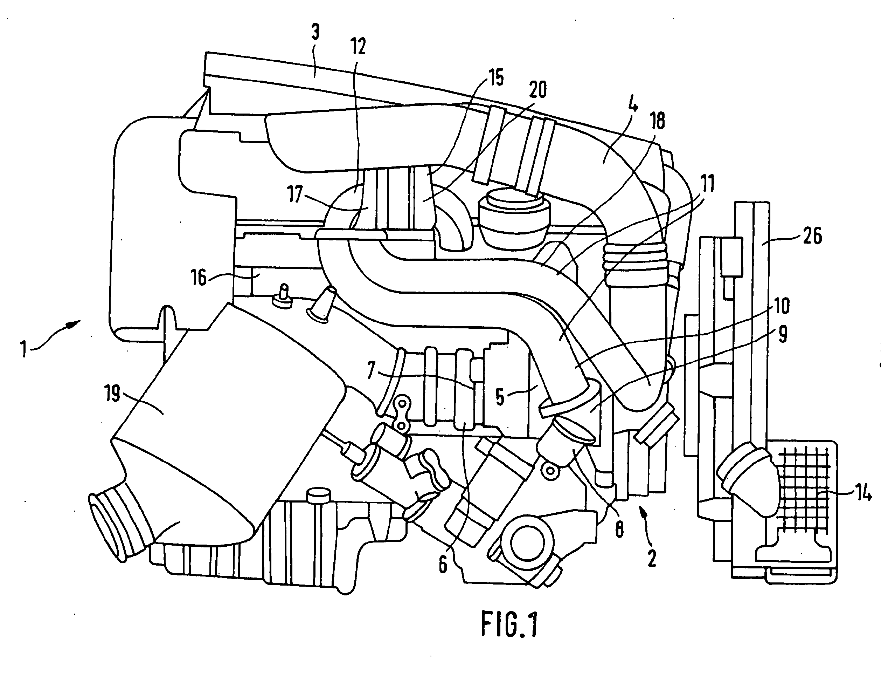

Fig. 1 zeigt in einer Darstellung von der Seite eine Brennkraftmaschine 1 mit daran angeordneter zweistufiger Abgasturboladeranordnung 2 nach der vorliegenden Erfindung.

Bei der Brennkraftmaschine 1 handelt es sich um einen Dieselmotor mit sechs in Reihe angeordneten Zylindern. In einem Luftfiltergehäuse 3 befindet sich ein nicht näher dargestelltes Filterelement, welches die angesaugte, zur Verbrennung vorgesehene Luft reinigt, die dann über ein Reinluftrohr 4 der Einlassseite eines Niederdruckverdichters 5 zugeführt wird. Der Niederdruckverdichter 5 wird von der Turbine 6 des so gebildeten Niederdruckladers 7 angetrieben.

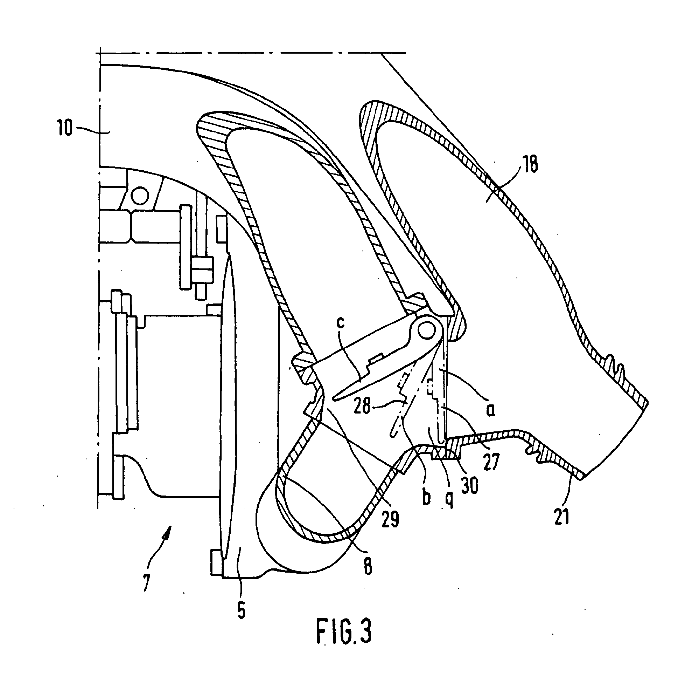

Die Ladeluft verlässt den Niederdruckverdichter 5 über einen Auslass 8 und gelangt in ein Kniestück 9, in dem sich ein näher anhand der Figuren 3 bis 6 ersichtliches Stellelement angeordnet befindet.

In Abhängigkeit von der Stellung dieses Stellelements gelangt die Ladeluft über einen ersten Leitungsabschnitt 10 einer Ladeluftleitung 11 zum Einlass 12 eines Hochdruckverdichters 13 und/oder einem Ladeluftkühler 14 und zwar über einen in Fig. 1 nicht dargestellten Ladeluftschlauch.

Der Hochdruckverdichter 13 wird über eine Turbine 15 angetrieben, wobei die Turbine 15 genauso wie die Turbine 6 vom Abgas der Brennkraftmaschine 1 angetrieben werden und zu diesem Zweck beide Turbinen 6, 15 mit einem Abgassammler 16 gasführend in Verbindung stehen.

Die Ladeluft kann den Hochdruckverdichter 13 über einen Auslass 17 verlassen und wird von der Ladeluftleitung 11 über einen zweiten Leitungsabschnitt 18 dem Ladeluftkühler 14 zugeführt. Vom Ladeluftkühler 14 aus gelangt die Ladeluft schließlich über eine nicht näher dargestellte Ladeluftleitung in den Einlasstrakt der Brennkraftmaschine 1.

Fig. 1 der Zeichnung zeigt darüber hinaus einen brennkraftmaschinennah angeordneten Partikelfilter 19, mit dem Feinstpartikel aus dem Abgas der Brennkraftmaschine 1 heraus gefiltert werden können. Fig. 1 der Zeichnung zeigt darüber hinaus auch, dass die Ladeluftleitung 11 einstückig ausgebildet ist und so mit dem Niederdrucklader 7 und dem aus Hochdruckverdichter 13 und Turbine 15 gebildeten Hochdrucklader 20 an der Brennkraftmaschine 1 angeordnet werden kann, dass zwischen der Ladeluftleitung 11 und dem Reinluftrohr 4 keine Berührungen, Überschneidungen oder Durchdringungen oder dergleichen bestehen und darüber hinaus der Partikelfilter 19 sehr nahe an der Brennkraftmaschine 1 angeordnet werden kann.

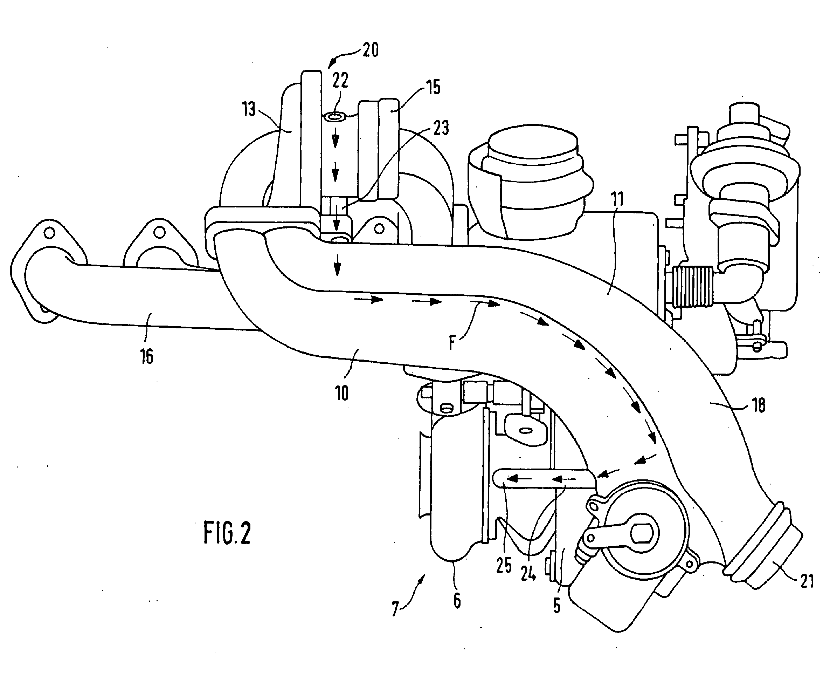

Fig. 2 zeigt in einer Ansicht von der Seite eine Abgasturboladeranordnung nach der vorliegenden Erfindung. Vom Niederdruckverdichter 5 gelangt die Ladeluft über den ersten Leitungsabschnitt 10 der Ladeluftleitung 11 zum Hochdruckverdichter 13 und von diesem über den zweiten Leitungsabschnitt 18, der zusammen mit dem ersten Leitungsabschnitt 10 die einstückig ausgebildete Ladeluftleitung 11 bildet, zu einem Auslass 21 der Ladeluftleitung 11, an dem ein nicht näher dargestellter Ladeluftschlauch lösbar befestigt werden kann und mit dem in Fig. 1 dargestellten Ladeluftkühler 14 gasführend in Verbindung steht.

Die in Fig. 2 dargestellte Ladeluftleitung 11 ist doppelschalig ausgebildet. Über einen Einlass 22 am Hochdrucklader 20 kann Kühlmittelfluid in den Bereich der Welle des Hochdruckladers 20 gebracht werden, um die Wellenlagerung zu kühlen. Das Kühlmittelfluid tritt dann über einen Auslass 23 aus und gelangt über einen nicht näher dargestellten Einlass an der doppelschalig ausgebildeten Ladeluftleitung 11 in einen dort ausgebildeten Ringkanal und kann entlang des am ersten Leitungsabschnitt 10 ausgebildeten Ringkanals (die Richtung der Kühlmittelströmung ist in Fig. 2 anhand der Pfeile F ersichtlich) strömen und dient dort der Zwischenkühlung der Ladeluft. Schließlich gelangt das Kühlmittelfluid über einen Auslass 24 in den Bereich der Wellenlagerung 25 des Niederdruckladers 7 und kann auf diese Weise die Wellenlagerung 25 kühlen, bevor es über den Wärmetauscher 26 (Fig. 1) gekühlt wird.

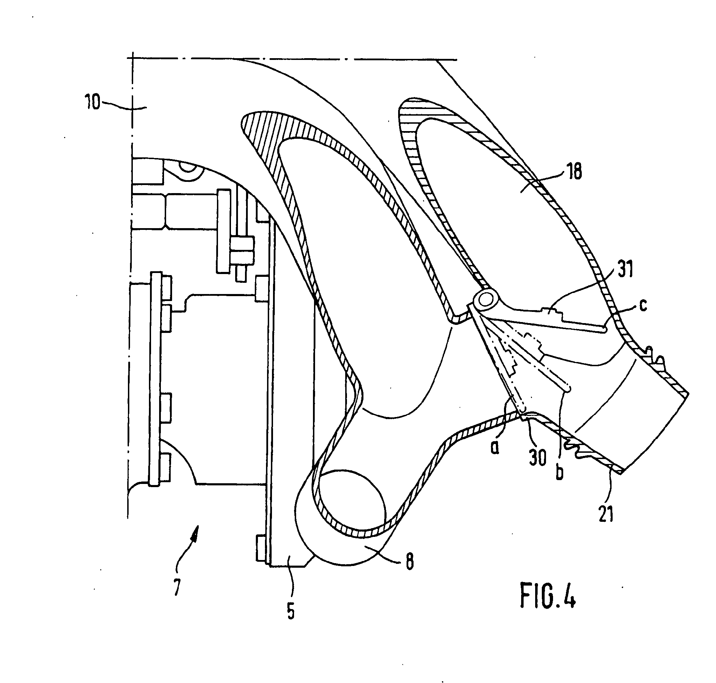

Fig. 3 und Fig. 4 beschreiben jeweils eine Ausführungsform, die nicht Teil der Erfindung ist, sondern als Beispiel zur Erleichterung eines Verständnisses der Erfindung dient.

Fig. 3 zeigt eine teilweise geschnittene Darstellung der Ladeluftleitung 11 im Bereich des Niederdruckladers 7. Die Ladeluft verlässt den Niederdruckverdichter 5 über den Auslass 8 und tritt dort in das Kniestück 9 ein, in dem sich ein Stellelement 27 in der Form einer Klappe angeordnet befindet, wobei die Klappe 27 über beispielsweise eine Unterdruckverstelleinheit betätigt werden kann, die wiederum von einem nicht näher dargestellten Motorsteuergerät angesteuert wird. Bei dem in Fig. 3 dargestellten Stellelement 27 handelt es sich um eine Klappe 28, die bei der mit "a" bezeichneten Stellung so angeströmt wird, dass die Ladeluft vollständig über den ersten Leitungsabschnitt 10 in Richtung zum Hochdruckverdichter 13 geführt wird. Mit "b" ist eine Stellung der Klappe 28 gezeigt, bei der ein Teilvolumenstrom der Ladeluft in Richtung zum Auslass 21 geführt wird und ein Teilvolumenstrom in Richtung zum Hochdruckverdichter 13. Schließlich zeigt "c" eine Stellung der Klappe 28, bei der die Brennkraftmaschine 1 weitgehend im Nennlastbereich betrieben wird, also ein Großteil des Volumenstroms der Ladeluft in Richtung zum Auslass 21 geführt wird, aber ein Spaltraum 29 verbleibt, über den ein Teilvolumenstrom der Ladeluft nach wie vor über den ersten Leitungsabschnitt 10 in Richtung zum Hochdruckverdichter 13 geführt wird. Alternativ hierzu - obwohl dies in den Figuren nicht näher dargestellt ist, kann anstatt des Spaltraums 29 auch ein Rückschlagventil mit Durchströmungsrichtung zum Hochdruckverdichter 13 in der Klappe 28 angeordnet sein oder in den weiteren in Fig. 4, 5 und 6 dargestellten Stellelementen.

Während Fig. 3 der Zeichnung eine vom Ladeluftstrom gegen einen Dichtsitz 30 beaufschlagte Klappe 28 zeigt, zeigt Fig. 4 der Zeichnung eine Ausführungsform, die nicht Teil der Erfindung ist und bei der das Stellelement in Form einer Klappe 31 so beaufschlagt wird, dass die Klappe 31 gegen den Ladeluftstrom zugedrückt werden muss und vom Ladeluftstrom also vom Dichtsitz 30 weg beaufschlagt wird. Im Übrigen entspricht die Funktion- und Wirkungsweise der Klappe 31 derjenigen der Klappe 28, wie sie vorstehend in Verbindung mit Fig. 3 der Zeichnung beschrieben worden ist.

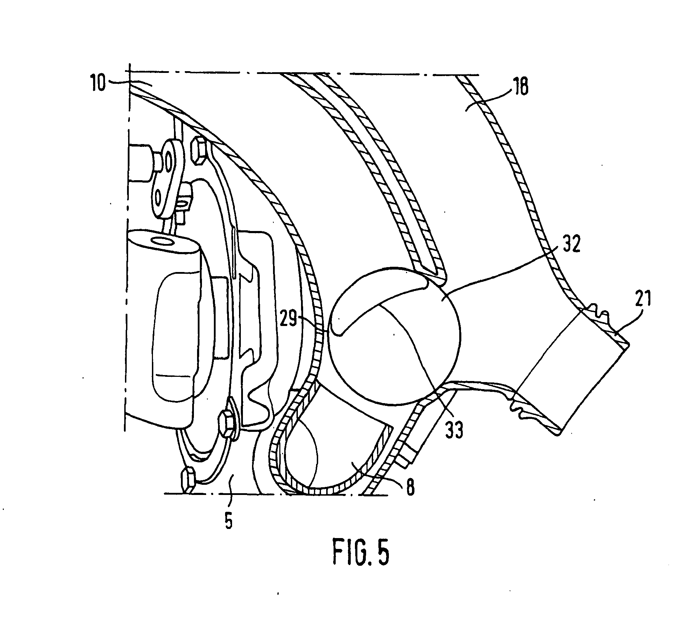

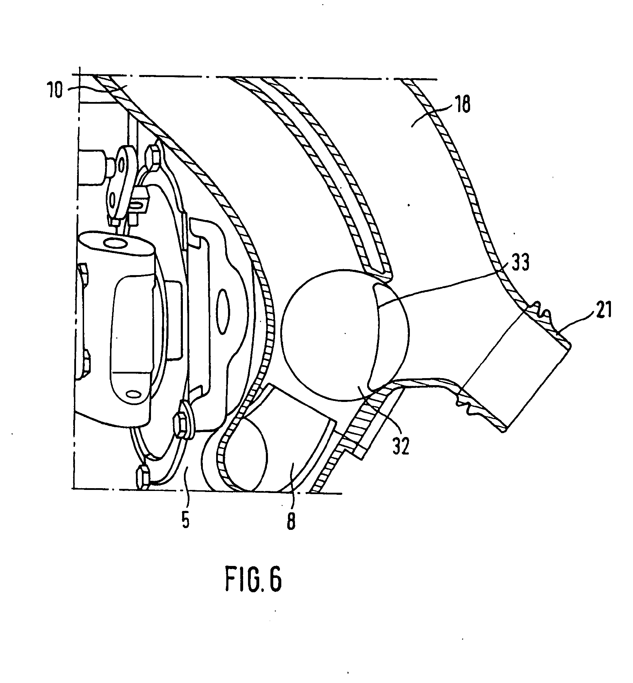

Schließlich zeigt Fig. 5 der Zeichnung eine Ausführungsform des Stellelements in Form eines Drehschiebers 32. Der Drehschieber 32 ist drehbar im Kniestück 9 angeordnet derart, dass die aus dem Auslass 8 austretende Ladeluft über eine gekrümmt ausgebildete Anströmfläche 33 in Richtung zum Auslass 21 hin strömungsgünstig umgeleitet werden kann - auch bei dieser Ausführungsform verbleibt ein Spaltraum 29 zur Leitung eines Teilvolumenstroms der Ladeluft in Richtung zum Hochdruckverdichter 13 hin - oder, wie dies Fig. 6 der Zeichnung zeigt, der den Auslass 8 verlassende Ladeluftstrom an der Anströmfläche 33 so umgelenkt wird, dass der Ladeluftstrom über den ersten Leitungsabschnitt 10 in Richtung zum Hochdruckverdichter 13 hin abgelenkt wird. Über eine entsprechende Drehung des Drehschiebers 32 sind Zwischenstellungen möglich, sodass ein den jeweiligen Betriebszuständen der Brennkraftmaschine 1 entsprechender Teilvolumenstrom der Ladeluft in Richtung zum Auslass 21 und/oder dem Hochdruckverdichter 13 geleitet werden kann.

### Bezugszeichenliste

- 1: Brennkraftmaschine
- 2: Abgasturboladeranordnung
- 3: Luftfiltergehäuse
- 4: Reinluftrohr
- 5: Niederdruckverdichter
- 6: Turbine
- 7: Niederdrucklader
- 8: Auslass
- 9: Kniestück
- 10: erster Leitungsabschnitt
- 11: Ladeluftleitung
- 12: Einlass
- 13: Hochdruckverdichter
- 14: Ladeluftkühler
- 15: Turbine
- 16: Abgassammler
- 17: Auslass
- 18: zweiter Leitungsabschnitt
- 19: Partikelfilter
- 20: Hochdrucklader
- 21: Auslass
- 22: Einlass
- 23: Auslass
- 24: Auslass
- 25: Wellenlagerung
- 26: Wärmetauscher
- 27: Stellelement
- 28: Klappe
- 29: Spaltraum
- 30: Dichtsitz
- 31: Klappe
- 32: Drehschieber
- 33: Anströmfläche
- F: Pfeile

## Patentansprüche

1. Schaltbare, zweistufige Abgasturboladeränordnung (2) für eine Brennkraftmaschine (1), mit einem Niederdrucklader (7) und einem Hochdrucklader (20), deren Turbinen (6, 15) mit einem Abgassammler (16) der Brennkraftmaschine (1) verbunden sind und deren Verdichter (5, 13) mittels einer Ladeluftleitung (11) miteinander und mit einem Ladeluftkühler (14) gasführend verbindbar sind und einen ersten Leitungsabschnitt (10) der ladelaftleitung (11) aufweist, mittels dem ein Auslass (8) des Niederdruckverdichters (5) mit einem Einlass (12) des Hochdruckverdichters (13) verbindbar ist und einen zweiten Leitungsabschnitt (18) der ladelaftleitung (11) aufweist, mittels dem ein Auslass (17) des Hochdruckverdichters (13) mit dem Ladeluftkühler (14) verbindbar ist, **dadurch gekennzeichnet, dass** die Ladeluftleitung (11) einstückig ausgebildet ist.

2. Abgasturboladeranordnung nach Anspruch 1, **dadurch gekennzeichnet, dass** der erste Leitungsabschnitt (10) einen Abzweig (9) aufweist zur gasführenden Verbindung des Niederdruckverdichters (5) mit dem Ladelüftkühler (14).

3. Abgasturboladeranordnung nach Anspruch 2, **dadurch gekennzeichnet, dass** im Bereich des Abzweigs (9) ein Stellelement (27) vorgesehen ist, mittels dem der von der Ladeluft durchströmte Querschnitt vom Niederdruckverdichter (5) zum Ladeluftkühler (14) und Hochdruckverdichter (13) veränderbar ist.

4. Abgasturboladeranordnung nach Anspruch 2 oder 3, **dadurch gekennzeichnet, dass** der Abzweig (9) ein mit dem ersten (10) und zweiten (18) Leitungsabschnitt lösbar verbindbares Kniestück (9) ist, an dem das Stellelement (27) verdrehbar oder verschwenkbar angelenkt ist.

5. Abgasturboladeranordnung nach Anspruch 3 oder 4, **dadurch gekennzeichnet, dass** das Stellelement (27) eine von der in Richtung zum Ladeluftkühler (14) strömenden Ladeluft gegen einen Dichtsitz (30) beaufschlagte Klappe (28) ist.

6. Abgasturboladeranordnung nach Anspruch 3 oder 4, **dadurch gekennzeichnet, dass** das Stellelement (27) eine von der in Richtung zum Ladeluftkühler (14) strömenden Ladeluft von einem Dichtsitz (30) weg beaufschlagte Klappe (31) ist.

7. Abgasturboladeranordnung nach Anspruch 3 oder 4, **dadurch gekennzeichnet, dass** das Stellelement (27) ein Drehschieber (32) ist mit einer zur Ladeluftumleitung gekrümmt ausgebildeten Anströmfläche (33).

8. Abgasturboladeranordnung nach Anspruch 3 oder 4, **dadurch gekennzeichnet, dass** das Stellelement (27) eine im Strömungsquerschnitt des Abzweigs weitgehend mittig drehbar angeordnete Klappe ist.

9. Abgasturboladeranordnung nach einem der vorstehenden Ansprüche, **dadurch gekennzeichnet, dass** der erste (10) und zweite (18) Leitungsabschnitt über weitgehend ihre gesamte Längserstreckung weitgehend parallel verlaufend ausgebildet sind.

10. Abgasturboladeranordnung nach einem der vorstehenden Ansprüche, **dadurch gekennzeichnet, dass** der erste (10) und/oder zweite (18) Leitungsabschnitt mindestens einen Kanal besitzt, durch den Kühlmittelfluid hindurch leitbar ist.

11. Abgasturboladeranordnung nach Anspruch 10, **dadurch gekennzeichnet, dass** der Kanal mit mindestens einer Leitung (23) verbindbar ist, über die Kühlmittelfluid in den Bereich von Lagern von Wellen des Niederdruckladers (7) und/oder Hochdruckladers (20) zur Lagerkühlung führbar ist.

12. Abgasturboladeranordnung nach einem der vorstehenden Ansprüche, **gekennzeichnet durch** eine Anordnung an der Brennkraftmaschine (1) derart, dass die Ladeluftleitung (11) und ein Reinluftrohr (4) der Brennkraftmaschine (1) zueinander berührungsfrei verlaufen.

13. Abgasturboladeranordnung nach einem der vorstehenden Ansprüche, **gekennzeichnet durch** eine Anordnung an der Brennkraftmaschine (1) derart, dass ein Partikelfilter (19) eine brennkraftmaschinennahe Lage besitzt und im Abstand zur Abgasturboladeranordnung (2) angeordnet ist.

14. Abgasturboladeranordnung nach einem der vorstehenden Ansprüche, **dadurch gekennzeichnet, dass** zwischen der Ladeluftleitung (11) und dem Ladeluftkühler (14) ein elastischer Ladeluftschlauch angeordnet ist derart, dass eine Körperschallübertragung von der Ladeluftleitung (11) zum Ladeluftkühler (14) weitgehend vermieden ist.

15. Abgasturboladeranordnung nach einem der vorstehenden Ansprüche, **dadurch gekennzeichnet, dass** der Niederdrucklader (7) und der Hochdrucklader (20) derart angeordnet sind, dass die Turbinen (6, 15) von einander weg ausgerichtet sind.

## Claims

1. A switchable two-stage turbocharger arrangement (2) for an internal combustion engine (1) comprising a low-pressure charger (7) and a high-pressure charger (20), the turbines (6, 15) of which are connected to an exhaust manifold (16) of the engine (1) whereas the compressors (5, 13) thereof are connectable to one another for conveying gas via a charge pipe (11) and a charge cooler (14), also comprising a first pipe portion (10) of the charge pipe (11) for connecting an output (8) of the low-pressure compressor (5) to an inlet (12) of the high-pressure compressor (13) and also comprising a second portion (18) of the charge pipe (11) for connecting an outlet (17) of the high-pressure compressor (13) to the charge cooler (14), **characterised in that** the charge pipe (11) is constructed in one piece.

2. A turbocharger arrangement according to claim 1, **characterised in that** the first pipe portion (10) has a branch (9) for connecting and conveying gas from the low-pressure compressor (5) to the charge cooler (14).

3. A turbocharger arrangement according to claim 2, **characterised in that** an adjusting element (27) is disposed near the branch (9) for altering the cross-section of the low-pressure compressor (5) through which the charge flows to the charge cooler (14) and the high-pressure compressor (13).

4. A turbocharger arrangement according to claim 2 or claim 3, **characterised in that** the branch (9) is a knee piece (9) releasably connectable to the first (10) and second (18) pipe portions and rotatably or pivotably connected to the adjusting element (27).

5. A turbocharger arrangement according to claim 3 or claim 4, **characterised in that** the adjusting element (27) is a flap or valve (28) pressed against a sealing-tight seat (30) by the charge flowing towards the charge cooler (14).

6. A turbocharger arrangement according to claim 3 or claim 4, **characterised in that** the adjusting element (27) is a flap or valve (31) pushed away from a sealing-tight seat (30) by the charge flowing towards the charge cooler (14).

7. A turbocharger arrangement according to claim 3 or claim 4, **characterised in that** the adjusting element (27) is a rotary slide valve (32) with a face area (33) which curves in order to bypass the charge.

8. A turbocharger arrangement according to claim 3 or claim 4, **characterised in that** the adjusting element (27) is a flap or valve rotatable substantially in the centre of the flow cross-section of the branch.

9. A turbocharger arrangement according to any of the preceding claims, **characterised in that** the first (10) and the second (18) pipe portions are substantially parallel over substantially their entire length.

10. A turbocharger arrangement according to any of the preceding claims, **characterised in that** the first (10) and/or second pipe portion (18) have at least one duct through which coolant fluid can be conveyed.

11. A turbocharger arrangement according to claim 10, **characterised in that** the duct is connectable to at least one pipe (23) for conveying cooling fluid to a place for cooling the bearings of shafts of the low-pressure charger (7) and/or the high-pressure charger (20).

12. A turbocharger arrangement according to any of the preceding claims, **characterised by** an arrangement on the engine (1) such that the charge pipe (11) and a clean-air pipe (4) belonging to the engine (1) extend without contact with one another.

13. A turbocharger arrangement according to any of the preceding claims, **characterised by** an arrangement on the engine (1) such that a particle filter (19) is disposed near the engine and at a distance from the turbocharger arrangement (2).

14. A turbocharger arrangement according to any of the preceding claims, **characterised in that** a resilient charge hose is disposed between the charge pipe (11) and the charge cooler (14) such as substantially to avoid transmission of structure-borne noise from the charge pipe (11) to the charge cooler (14).

15. A turbocharger arrangement according to any of the preceding claims, **characterised in that** the low-pressure charger (7) and the high-pressure charger (20) are so disposed that the turbines (6, 15) are aligned away from one another.

## Revendications

1. Montage de turbocompresseurs de gaz d'échappement (2) à deux étages, commutables, de moteur à combustion interne (1) comportant un étage basse pression (7) et un étage haute pression (20) dont les turbines (6, 15) sont reliées à un collecteur de gaz d'échappement (16) du moteur à combustion interne (1) et dont les compresseurs (5, 13) sont reliés ensemble et à un refroidisseur d'air de suralimentation (14) traversé par les gaz, ce montage ayant un premier segment (10) de la conduite d'air de suralimentation (11) qui peut relier la sortie (8) du compresseur base pression (5) à l'entrée (12) du compresseur haute pression (13) et un second segment (18) de la conduite d'air de suralimentation (11) qui peut relier la sortie (17) du compresseur haute pression (13) au refroidisseur d'air de suralimentation (14),
montage **caractérisé en ce que**
la conduite d'air de suralimentation (11) est en une seule pièce.

2. Montage de turbocompresseurs de gaz d'échappement selon la revendication 1,
**caractérisé en ce que**
le premier segment de conduite (10) comporte une dérivation (9) pour relier le compresseur basse pression (5) au refroidisseur d'air de suralimentation (14) pour le passage des gaz.

3. Montage de turbocompresseurs de gaz d'échappement selon la revendication 2,
**caractérisé en ce que**
la zone de la dérivation (9), comporte un élément d'actionnement (27) qui permet de modifier la section traversée par l'air de suralimentation entre le compresseur basse pression (5) vers le refroidisseur d'air de suralimentation (14) et le compresseur haute pression (13).

4. Montage de turbocompresseurs de gaz d'échappement selon la revendication 2 ou 3,
**caractérisé en ce que**
la dérivation (9) comporte une pièce formant coude (9) qui peut être reliée de manière amovible au premier segment de conduite (10) ou au second segment de conduite (18), l'élément d'actionnement (27) étant articulé de manière à pouvoir tourner ou pivoter sur cette pièce.

5. Montage de turbocompresseurs de gaz d'échappement selon la revendication 3 ou 4,
**caractérisé en ce que**
l'élément d'actionnement (27) est un volet (28) sollicité par l'air de suralimentation passant en direction du refroidisseur d'air de suralimentation (14) pour être appliqué contre un siège d'étanchéité (30).

6. Montage de turbocompresseurs de gaz d'échappement selon la revendication 3 ou 4,
**caractérisé en ce que**
l'élément d'actionnement (27) est un volet (31) sollicité par l'air de suralimentation circulant en direction du refroidisseur d'air de suralimentation (14) pour s'écarter du siège d'étanchéité (30).

7. Montage de turbocompresseurs de gaz d'échappement selon la revendication 3 ou 4,
**caractérisé en ce que**
l'élément d'actionnement (27) est un tiroir rotatif (32) avec une surface d'attaque de flux (33) de courbure en direction de la conduite de dérivation d'air de suralimentation.

8. Montage de turbocompresseurs de gaz d'échappement selon la revendication 3 ou 4,
**caractérisé en ce que**
l'élément d'actionnement (27) est un volet monté de manière rotative pratiquement au centre de la section de passage de la dérivation.

9. Montage de turbocompresseurs de gaz d'échappement selon l'une des revendications précédentes,
**caractérisé en ce que**
le premier segment de conduite (10) et le second segment de conduite (18) sont réalisés pour être pratiquement parallèles sur une grande partie de toute leur extension longitudinale.

10. Montage de turbocompresseurs de gaz d'échappement selon l'une des revendications précédentes,
**caractérisé en ce que**
le premier segment de conduite (10) et/ou le second segment de conduite (18) ont au moins un canal par lequel peut passer un agent de refroidissement fluide.

11. Montage de turbocompresseurs de gaz d'échappement selon la revendication 10,
**caractérisé en ce que**
le canal peut être relié à au moins une conduite (23) par laquelle l'agent de refroidissement fluide est guidé dans la zone des paliers de l'arbre du compresseur basse pression (7) et/ou celui du compresseur haute pression (20) pour refroidir les paliers.

12. Montage de turbocompresseurs de gaz d'échappement selon l'une des revendications précédentes,
**caractérisé par**
un montage sur le moteur à combustion interne (1) de façon que la conduite d'air de suralimentation (11) et la conduite d'air frais (4) du moteur à combustion interne (1) passent l'une à côté de l'autre sans se toucher.

13. Montage de turbocompresseurs de gaz d'échappement selon l'une des revendications précédentes,
**caractérisé par**
un montage sur le moteur à combustion interne (1) de façon qu'un filtre à particules (19) soit placé à proximité du moteur à combustion interne et de façon éloignée, du dispositif de turbocompresseurs des gaz d'échappement (2).

14. Montage de turbocompresseurs de gaz d'échappement selon l'une des revendications précédentes,
**caractérisé par**
une conduite d'air de suralimentation, élastique, entre la conduite d'air de suralimentation (11) et le refroidisseur d'air de suralimentation (14) de façon à éviter dans une très large mesure, la transmission du bruit de structure de la conduite d'air de suralimentation (11) vers le refroidisseur d'air de suralimentation (14).

15. Montage de turbocompresseurs de gaz d'échappement selon l'une des revendications précédentes,
**caractérisé en ce que**
le turbocompresseur basse pression (7) et le turbocompresseur haute pression (20) sont montés pour que les turbines (6, 15) soient dirigées de façon à s'écarter.
